# EUROPÄISCHE PATENTSCHRIFT

(11) **EP 1 449 765 B1**
(45) Veröffentlichungstag und Bekanntmachung des Hinweises auf die Patenterteilung: **22.06.2005**
(21) Anmeldenummer: 04002966.2
(22) Anmeldetag: 11.02.2004
(51) Int. Cl.: B64D 11/00

(54) **Transporteinrichtung für den Vertikaltransport von Verpflegungsbehältern in einem Verkehrsflugzeug**
Transport device for vertically transporting trolleys in aircraft
Dispositif de transport pour le transport vertical des chariots de service dans les aéronefs

(30) Priorität: 24.02.2003 DE 10307957
(43) Veröffentlichungstag der Anmeldung: 25.08.2004
(73) Patentinhaber: Airbus Deutschland GmbH, 21129 Hamburg (DE)
(72) Erfinder: Boe, Christian, Prof., 3520 Farum (DK); Jensen, Anders, 3450 Alleroed (DK); Lund, Thomas, 2950 Vedbaek (DK)
(74) Vertreter: Hansmann, Dierk, Dipl.-Ing.

(56) Entgegenhaltungen:
- DE-A- 19 955 801

## Beschreibung

Die Erfindung betrifft eine Transporteinrichtung für den Vertikaltransport von Verpflegungsbehältern in einem Verkehrsflugzeug, wobei die Transporteinrichtung mehrere Greifvorrichtungen umfasst und die Greifvorrichtungen an einem von oben zugreifendes Liftsystem angeordnet sind und Verpflegungsbehälter zwischen mindestens zwei Decks bewegen.

Vor allem bei Großraum-verkehrsflugzeugen besteht der Bedarf, zusätzlich zur Kabine den Unterflur-Frachtraum für die Unterbringung von Verpflegungsgütern zu nutzen, um so im Kabinenbereich Platz für weitere Passagiere zu schaffen. Die prinzipielle Lösung besteht darin, dass die verpflegungsgüter (z.B. Essen, Getränke, Verkaufswaren), welche sich in besonderen Behältnissen befinden, in einem Unterflur-Frachtcontainer mit Standardquerschnitt (z.B. LD6) eingelagert werden und dann per Lift in die Bordküche der Kabine gelangen. Bei den Behältnissen kann es sich um Leichtbaukisten oder mit Rädern versehene Essenskarren (Trolleys) handeln. Ebenso kommen dabei auch Transportkäfige infrage, in welchen sich die Verpflegungsbehältnisse befinden. Bei der Beladung des Flugzeugs wird der Verpflegungscontainer zusammen mit anderen Frachtcontainern über eine Unterflurfrachttür in den Rumpf eingebracht und unterhalb der in der Kabine befindlichen Küchenstation (Galley) positioniert. Somit können sich vor oder hinter dem Verpflegungscontainer weitere Frachtcontainer befinden, was heißt, dass während der Beladung der Frachtraumquerschnitt durchgängig sein sollte, da meist nur eine Frachttür pro Frachtraum vorhanden ist. Notwendige Einrichtungen zum vertikaltransport von Verpflegungsbehältnissen dürfen die Durchgängigkeit des Frachtraumes nicht behindern.

Die DE 199 55 801 A1 zeigt beispielsweise eine Vertikalfördereinrichtung, wobei ein Transportkorb an einem Mast vertikal verfahrbar angeordnet ist. In einer Ausführungsform ist ersichtlich, dass auch unterhalb der unteren Mastbefestigung eine Ebene vorgesehen ist, auf die der Transportkorb abgesenkt werden kann. Für diese Hebe- und Senkfunktion sind Hubscheren als zweite Fördereinrichtung - unabhängig von der Förderung am Mast - vorgesehen, die seitlich am Transportkorb angreifen und durch Bewegung der Scheren den Transportkorb heben und gleichzeitig führen. Mit dieser Fördereinrichtung ist es beispielsweise vorgesehen, eine Be- oder Entladung von Versorgungsgütern durch eine Klappe eines Flugzeuges vertikal nach unten vorzunehmen. Diese zusätzliche Transportmöglichkeit weist jedoch keine Transportsicherung auf, wie es beispielsweise beim Betreiben der Fördereinrichtung während des Fluges unerlässlich ist. Auch ist die Funktionsweise einer derartigen Greifvorrichtung nicht im Einzelnen ausgeführt.

Es ist nunmehr Aufgabe der Erfindung, eine Transporteinrichtung für den Vertikaltransport auszubilden, die ein einfaches Greifen und sicheres Halten der Verpflegungsbehälter sicherstellt, wobei ein automatischer Ablauf der Greif- und der Entkoppelbewegung mit einfachen und zuverlässigen Mitteln ermöglicht werden soll.

Diese Aufgabe wird erfindungsgemäß durch die im Patentanspruch 1 genannten Maßnahmen gelöst.

Dabei ist nach Anspruch 1 insbesondere vorteilhaft, dass mit den erfindungsgemäßen Greifvorrichtungen in einfacher, zuverlässiger und toleranzausgleichender Weise ein Greifen und Abkoppeln des Verpflegungsbehälters möglich ist. Die Bewegungsabläufe sind mechanisch gekoppelt, was zusätzliche Sensoren und Aktuatoren überflüssig macht.
Für ein toleranzbehaftetes Absenken oder ein ungleichmäßiges Absetzen der vier Seiten des Verpflegungsbehälters auf einen Boden in vertikaler Richtung sowie für ein gutes Zusammenspiel mit einem Horizontalfördersystem in horizontaler Richtung kann ein Ausgleich durch die erfindungsgemäßen Greifvorrichtungen in Zusammenspiel mit den Rastelementen erfolgen.

Weiterbildungen und vorteilhafte Ausgestaltungen sind in den Ansprüchen 2 bis 10 angegeben.

Weitere Einzelheiten und Vorteile ergeben sich aus der nachfolgenden Beschreibung von Ausführungsbeispielen der Erfindung.

In der Zeichnung ist ein Ausführungsbeispiel der Erfindung dargestellt, welches nachstehend anhand der Figuren 1 bis 4 näher beschrieben ist. In den Figuren sind gleiche Bauteile mit gleichen Bezugszeichen versehen.

Es zeigen im einzelnen:
- Fig. 1: einen Versorgungsbehälter in einem Verpflegungscontainer mit einer Anordnung einer erfindungsgemäßen Transporteinrichtung in einer Ansicht von der Seite,
- Fig. 2: eine Greifvorrichtung in einer Detaildarstellung,
- Fig. 3: die Greifvorrichtung gemäß Fig. 3 in perspektivischer Ansicht und
- Fig. 4: der Ablauf eines Auskoppelvorganges eines versorgungsbehälters.

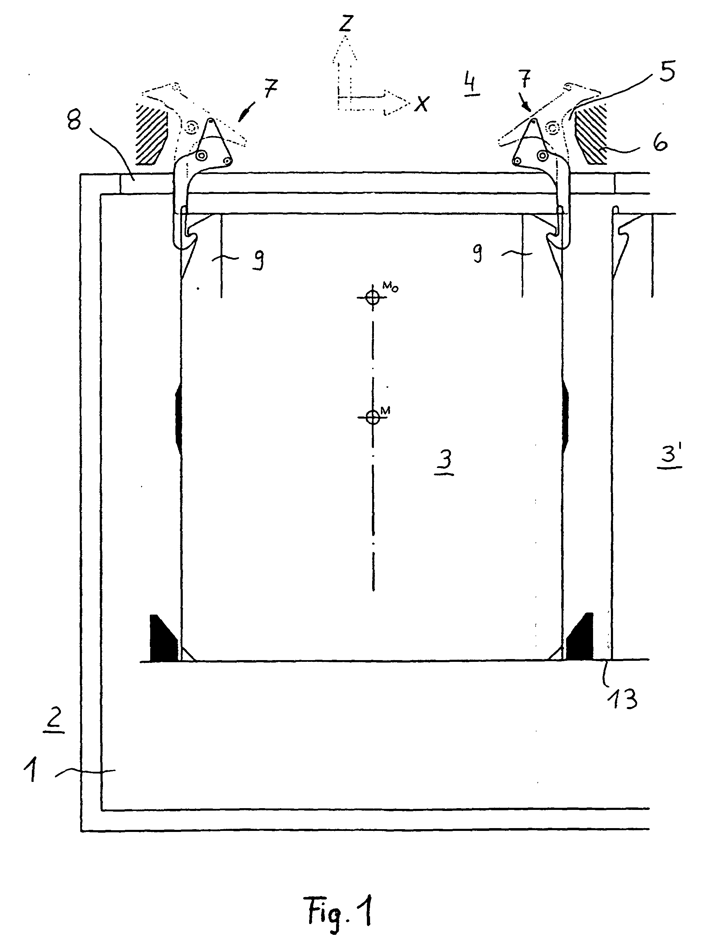

In Fig. 1 ist in einer Seitenansicht ein Ausschnitt eines Verpflegungscontainers 1 gezeigt, der im Frachtraum eines Verkehrsflugzeuges angeordnet ist. Ein Unterflur-Frachtraum 2 befindet sich unterhalb eines Hauptdecks 4 und dient sowohl zur Aufnahme von Frachtcontainern als auch von Verpflegungscontainern. Der Verpflegungscontainer 1 entspricht vorzugsweise in den Abmessungen den bekannten Frachtcontainern. Der Verpflegungscontainer 1 wird von außen durch eine Frachttür in den Frachtraum 2 eingebracht und vorzugsweise unterhalb der im Hauptdeck 4 befindlichen Bordküche positioniert. Der Verpflegungscontainer 1 nimmt Verpflegungsgüter in Form von speziellen Behältnissen wie z.B. Standard-Trolleys oder Boxen auf, wobei im Container 1 mehrere Verpflegungsbehälter 3, 3' vorgesehen sind, die auf einem Zwischenboden 13 stehen und mittels eines Horizontalfördersystems in X- und Y-Richtung verschoben werden können.

Es ist vorgesehen, mit einer Vertikaltransportvorrichtung (nicht gezeigt) einen unterhalb einer Öffnung 5 im Flugzeugboden positionierten Verpflegungsbehälter 3 in die Bordküche im Hauptdeck 4 zu transportieren. Die Vertikaltransportvorrichtung ist beispielsweise aus der Patentanmeldung DE 102 04 892.4 prinzipiell bekannt und weist unter anderem einen Liftantrieb sowie innerhalb eines Liftschachtes 6 einen Liftschlitten auf (nicht gezeigt), wobei diese Bauteile sich oberhalb des Frachtraumes 2 befinden und die Durchgängigkeit des Frachtraumes gewährleistet bleibt. Die Vertikaltransportvorrichtung weist weiterhin eine Greifvorrichtung 7 auf, die zwischen dem Liftschlitten als Transportmittel und dem Verpflegungsbehältnis 3 eine Wirkverbindung für den Transportvorgang herstellt. Die Greifvorrichtung 7 muss durch die Öffnung 5 im Flugzeugboden sowie eine Öffnung 8 im Verpflegungscontainer 1 greifen und an entsprechenden Rastelementen 9 am Verpflegungsbehälter 3 einrasten, um die Wirkverbindung herzustellen. Die Rastelemente 9 sind vorzugsweise jeweils an den Außenecken des Verpflegungsbehälters 3 angeordnet. Es ist jedoch auch möglich, dass ein Anbringen von zusätzlichen Teilen nicht notwendig ist, sondern Rastelemente 9 direkt in den Behälter 3 eingearbeitet werden. Die Anordnung der Greifvorrichtung 7 ist entsprechend der Anordnung der Rastelemente 9 vorzusehen. Die Wirkungsweise der Greifvorrichtung 7 wird nachfolgend beschrieben.

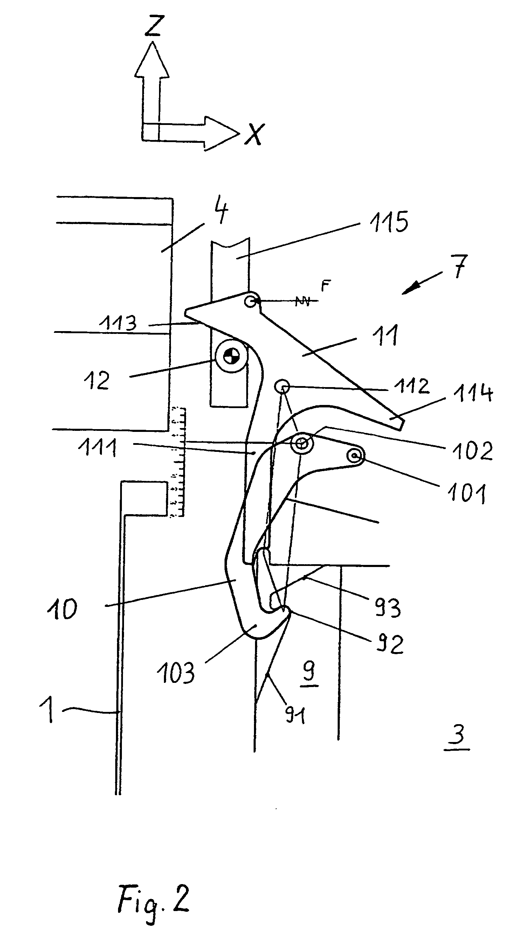

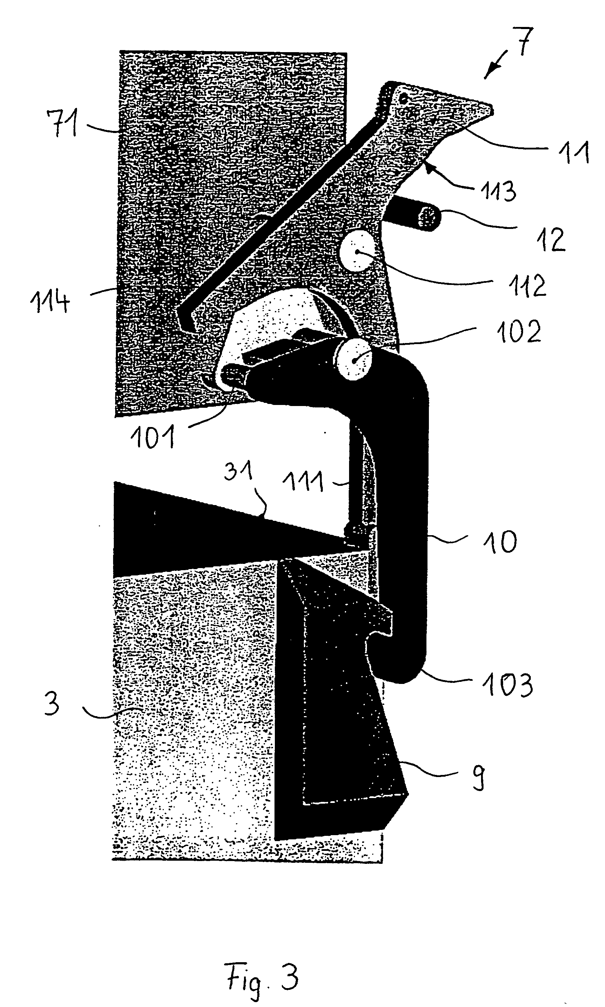

In der Fig. 2 ist die Greifvorrichtung 7 als Einzelheit dargestellt. In Fig. 3 ist die Greifvorrichtung in einer Perspektivdarstellung ersichtlich.
Die Greifvorrichtung 7 besteht für jeweils ein Rastelement 9 im wesentlichen aus einem Lifthaken 10 und einer Sperrklinke 11. Die Elemente der Greifvorrichtung 7 sind an einem Träger 71 drehbar befestigt, der vorzugsweise Bestandteil des (nicht gezeigten) Liftschlittens der Vertikaltransportvorrichtung ist. Die Sperrklinke 11 sowie der Lifthaken 10 sind mechanisch gekoppelt und somit kann ein sensorfreies und toleranzausgleichendes Greifen in das Rastelement 9 erfolgen. Ein an der Flugzeugstruktur befestigtes, vorzugsweise im Liftschacht 6 fest positioniertes Aktivierungselement 12 entriegelt bei Erreichen einer Entriegelposition den Eingriff der Sperrklinke 11 mit dem Behälter 3 und entgegen einer Rückstellkraft wird der Sperrarm 111 um einen Drehpunkt 112 außer Eingriff mit der Oberkante 31 des Verpflegungsbehälters 3 gebracht. Das Aktivierungselement 12 ist in der gezeigten Ausführung als ein Anschlagbolzen ausgebildet, welcher beim Absenken des verpflegungsbehälters 3 an eine Kulissenführung 113 der Sperrklinke 11 anschlägt und entlang der Kulisse 113 geführt wird. In einer bevorzugten Ausgestaltung kann das Aktivierungselement 12 als integrales Element einer Längsführung 115 ausgebildet sein oder an einer Längsführung 115 befestigt sein, so dass der Sperrarm 111 durch die seitliche Zwangsführung 115 außerhalb einer beabsichtigten Position sich nicht selbstständig entriegeln kann. Die Längsführung 115 ist ebenfalls strukturfest, vorzugsweise innerhalb des Liftschachtes angeordnet.

Die Sperrklinke 11 ist in der gezeigten Ausführungsform in Wirkverbindung mit dem Lifthaken 10 angeordnet. Ein Anschlagarm 114 der Sperrklinke 11 trifft durch Drehung um den Drehpunkt 112, welches durch Bewegung des Anschlagbolzens 12 entlang der Kulissenführung 113 bewirkt wird, auf einen Mitnehmer 101 des Lifthakens 10. Nachdem der Sperrarm 111 die Oberkante 31 des Verpflegungsbehälters 3 freigegeben hat und somit in Z-Richtung der Behälter 3 frei beweglich ist (der Behälter steht nun auf dem Zwischenboden 13), kann auch ein Öffnen des Lifthakens 10 erfolgen. Dafür drückt der Anschlagarm 114 den Mitnehmer 101 und erzeugt durch Drehung um einen Drehpunkt 102 ein Moment, welches eine Einrastklaue 103 hebelartig aus dem Rastelement 9 ausklinkt.

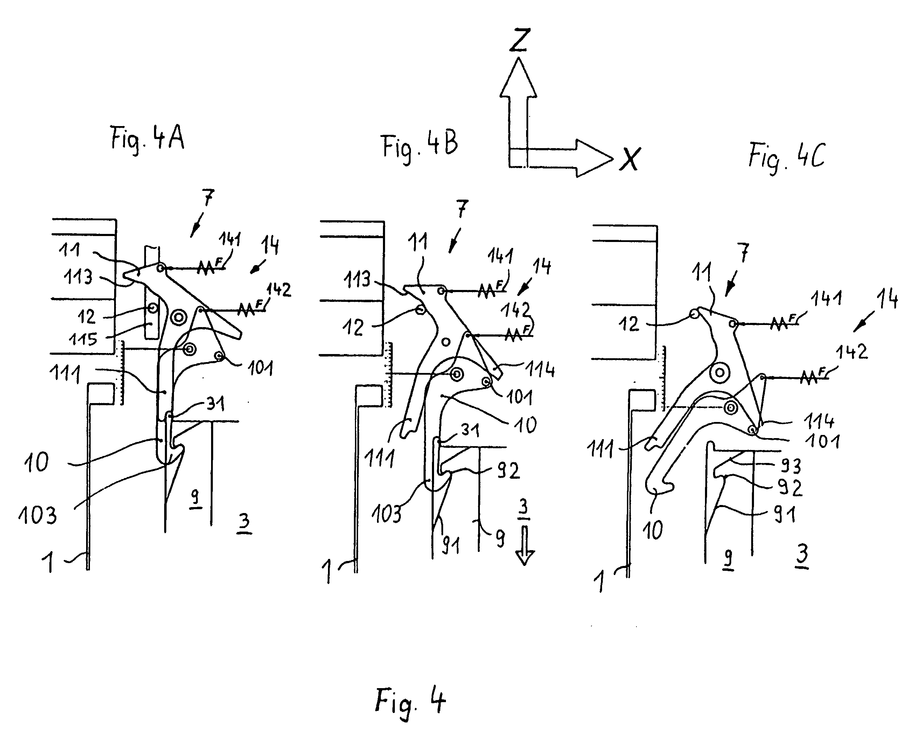

Der Ablauf einer Öffnungsbewegung der Greifvorrichtung 7 ist näher in der Fig. 4 dargestellt. Die Fign. 4A bis 4C zeigen verschiedene Bewegungszustände, wobei in Fig. 4A der geschlossene Zustand, in Fig. 4B der Zustand mit freigegebener Z-Richtung sowie in Fig. 4C der Zustand mit völliger Öffnung der Greifvorrichtung 7 gezeigt ist.

In dem in Fig. 4A gezeigten Zustand ist die Greifvorrichtung 7 im vollständigen Eingriff mit dem Rastelement 9. Es ist ersichtlich, dass die Kulisse 113 der Sperrklinke 11 noch nicht das Aktivierungselement 12 erreicht hat. Für einen gesicherten Eingriff in die Rastelemente 9 ist es vorgesehen, Rückstelleinrichtungen 14 einzusetzen, die die Sperrklinke 11 sowie den Lifthaken 10 jederzeit in x-Richtung, d.h. in Eingriffsrichtung mit dem jeweiligen Rastelement 9 halten. Die Rückstelleinrichtungen 14 können entweder als Federeinrichtungen 141, 142 gebildet durch Spiralfedern, als Gasdruckfedern, als um die Drehpunkte 102 und/oder 112 wirkende Drehfedern oder weitere mögliche federkrafterzeugende Elemente ausgebildet sein, die einen permanenten Eingriff der Greifvorrichtung 7 in das Rastelement 9 bewirken und erst bei Auslösung des Aktivierungselementes 12 das Entriegeln zulassen.

Die Federeinrichtung 141 greift an der Sperrklinke 11 sowie die Federeinrichtung 142 greift am Lifthaken 10 an und beide bewirken mit der wirkenden Federkraft ein Haltemoment.

Der Sperrarm 111 ist an der Oberkante 31 verriegelt sowie die Einrastklaue 103 befindet sich im Eingriff mit dem Rastelement 9. Darüber hinaus ist das Führungselement 115 als seitliche Sicherung vorgesehen, um den Sperrarm 111 erst in der Öffnungsposition - im Bereich des Aktivierungselementes - freizugeben.

In Fig. 4B ist die Position gezeigt, bei der durch die Abwärtsbewegung des Versorgungsbehälters 3 die Sperrklinke 11 entriegelt ist, der Lifthaken 10 jedoch noch den Versorgungsbehälter 3 hält. Aufgrund der Abwärtsbewegung ist der strukturfeste Anschlagbolzen 12 in Anschlag mit der Kulissenführung 113 gekommen und der Sperrarm 111 schwenkt entgegen der Federkraft der Feder 141 auf und gibt die Oberkante 31 des Verpflegungsbehälters 3 frei. Der Verpflegungsbehälter 3 steht nun auf dem Zwischenboden (gezeigt in Fig. 1). Durch eine weitere Absenkbewegung und der damit verbundenen weiteren Bewegung der Sperrklinke 11 entlang des Anschlagbolzens 12 soll nunmehr das Öffnen des Lifthakens 10 erfolgen. Dafür schlägt ein Anschlagarm 114 am Mitnehmer 101 an, bewirkt eine Drehung des Lifthakens 10 um den Drehpunkt 102 und rastet damit entgegen der Federkraft 142 die Einrastklaue 103 aus dem Rastelement 9 aus. Noch bevor der Anschlagarm 114 am Mitnehmer 101 anschlägt, wird durch die Abwärtsbewegung der Greifvorrichtung 7 (wenn bereits der Verpflegungsbehälter 3 auf dem Zwischenboden 13 steht) die Greifklaue 103 entlang einer Aushakschräge 91 aus der Hakenposition 92 geschoben und damit das nachfolgende Öffnen ermöglicht, welches in Fig. 4C mit der vollständig geöffneten Position gezeigt ist. In dieser Position kann der Verpflegungsbehälter 3 vorzugsweise in Y-Richtung von der Liftposition verschoben werden.

Der Teil der Abwärtsbewegung, der zwischen den Bewegungszuständen Fig. 4B und 4C erkennbar ist, ermöglicht weiterhin, dass ein toleranzbehaftetes Absenken oder ein ungleichmäßiges Absetzen der vier Seiten des Verpflegungsbehälters 3 auf dem Zwischenboden 13 ausgeglichen werden kann.

Mit der Nutzung dieses Greifmechanismus 7 ist ein Bewegungsablauf des Verpflegungsbehälters 3 entsprechend des in Fig. 2 eingezeichneten Parallelogramms möglich. Der Mechanismus ist selbsteinstellend und ermöglicht, dass der Verpflegungsbehälter 3 sich in X-Richtung ausrichten kann; damit ist ein erleichterter Abgleich mit dem Horizontalführungssystem innerhalb des Versorgungscontainers 1 möglich. Auch ist es denkbar, durch Veränderung der kinematischen Bedingungen, d.h. beispielsweise durch Veränderung der Abstände zwischen den Drehpunkten 102 und 112 sowie durch Änderung der Form der Kulissenführung 113 oder des Anschlagarmes 114, einen veränderten Bewegungsablauf zu erzielen entsprechend der Anforderungen, die aufgrund der Kopplung des Vertikaltransportes mit einem Horizontalfördersystem notwendig werden können.

Für einen Eingreifprozess der Greifvorrichtung 7, um einen in Liftposition befindlichen Verpflegungsbehälter 3 zum Hauptdeck 4 zu transportieren, laufen die zuvor beschriebenen Schritte in entgegengesetzter Reihenfolge ab. Als weitere Möglichkeit kann für den Eingreifprozeß (im Unterschied zu Fig. 4C) zunächst eine Öffnung des Lifthakens 10 sowie der Sperrklinke 11 nicht notwendig sein. Wenn der Verpflegungsbehälter 3 auf dem Zwischenboden 13 in Liftposition steht, kann beim Absenken der Greifvorrichtung 7 der Lifthaken 10 entlang einer Einhakschräge 93 gleiten und wie in Fig. 4A ersichtlich in der Hakenposition 92 einhaken und der Sperrarm 111 greift an der Oberkante 31 des Behälters 3 an. Aufgrund der Federeinrichtung 14 wird automatisch der Lifthaken 10 sowie die Sperrklinke 11 in Eingriffposition gehalten.

## Patentansprüche

1. Transporteinrichtung für den Vertikaltransport von Verpflegungsbehältern (3) in einem Verkehrsflugzeug, wobei die Transporteinrichtung ein Liftsystem, Verpflegungsbehälter und mehrere Greifvorrichtungen (7) umfasst und die Greifvorrichtungen (7) an dem von oben zugreifenden Liftsystem angeordnet sind und Verpflegungsbehälter zwischen mindestens zwei Decks bewegen, **dadurch gekennzeichnet, dass** entsprechend der Anzahl der Greifvorrichtungen (7) am verpflegungsbehälter (3) Rastelemente (9) vorgesehen sind, in die der Eingriff der entsprechenden Greifvorrichtung (7) erfolgt und die jeweilige Greifvorrichtung (7) einen Lifthaken (10) sowie eine Sperrklinke (11) aufweist, wobei der Lifthaken (10) und die Sperrklinke (11) mechanisch gekoppelt sind und zum Verriegeln des Verpflegungsbehälters (3) in Horizontalrichtung der Lifthaken (10) in Eingriff mit dem Rastelement (9) gebracht wird und zum Verriegeln in Vertikalrichtung die Sperrklinke (11) an einem oberen Bereich des Verpflegungsbehälters angreift.

2. Transporteinrichtung nach Anspruch 1, **dadurch gekennzeichnet, dass** die Anordnung der Rastelemente (9) an der Seitenwand des Verpflegungsbehälters (3) im oberen Eckenbereich erfolgt.

3. Transporteinrichtung nach einem der Ansprüche 1 oder 2, **dadurch gekennzeichnet, dass** eingearbeitete Rastelemente (7) im oberen Bereich der Behälterseitenwand vorgesehen sind.

4. Transporteinrichtung nach einem der Ansprüche 1 bis 3, **dadurch gekennzeichnet, dass** während der Absenkbewegung bei Erreichen einer Öffnungsposition ein Aktivierungselement (12) entlang einer Kulissenführung (113) der Sperrklinke (11) gleitet und einen Sperrarm (111) außer Eingriff mit der Oberkante (31) des Verpflegungsbehälters (3) bringt.

5. Transporteinrichtung nach einem der Ansprüche 1 bis 4, **dadurch gekennzeichnet, dass** während der Absenkbewegung bis Erreichen einer Öffnungsposition die Sperrklinke (11) mittels eines Führungselementes (115) zwangsverriegelt ist.

6. Transporteinrichtung nach einem der Ansprüche 1 bis 5, **dadurch gekennzeichnet, dass** eine mechanische Kopplung zwischen dem Lifthaken (10) und der Sperrklinke (11) mittels eines Anschlagarmes (114) erfolgt, der durch Auslösung innerhalb eines bestimmten Absenkweges, nachdem ein Aktivierungselement (12) erreicht wurde, einen Mitnehmer (101) des Lifthakens (10) bewegt und damit eine Einrastklaue (103) aus der Hakenposition (92) entriegelt.

7. Transporteinrichtung nach einem der Ansprüche 1 bis 6, **dadurch gekennzeichnet, dass** an der Sperrklinke (11) sowie an dem Lifthaken (10) Rückstelleinrichtungen (14) angeordnet sind, die einen permanenten Eingriff des Lifthakens (10) und der Sperrklinke (11) mit dem Verpflegungsbehälter (3) bewirken, der nur durch das Aktivieren eines Aktivierungselementes (12) abschaltbar ist.

8. Transporteinrichtung nach Anspruch 7, **dadurch gekennzeichnet, dass** die Rückstelleinrichtungen (14) als Federeinrichtungen (141, 142) ausgebildet sind.

9. Transporteinrichtung nach einem der Ansprüche 1 bis 8, **dadurch gekennzeichnet, dass** zum Herstellen der Eingreifposition ein Absenken der Greifvorrichtung (7) erfolgt und dabei der Lifthaken (10) entgegen einer Rückstellkraft über eine Einhakschräge (93) des Rastelementes (9) gleitet bis die Einrastklaue (103) in der Hakenposition (92) eingerastet ist.

10. Transporteinrichtung nach einem der Ansprüche 1 bis 9, **dadurch gekennzeichnet, dass** zum Erreichen der Auskoppelposition ein Absenken der Greifvorrichtung (7) erfolgt nachdem ein Sperrarm (111) entriegelt ist und dabei der Lifthaken (10) entgegen einer Rückstellkraft über eine Aushakschräge (91) des Rastelementes (9) gleitet bis die Einrastklaue (103) durch Drehung des Lifthakens (10) um einen Drehpunkt (102) ausrastet.

## Claims

1. Conveyor unit for conveying food containers (3) vertically in a passenger aircraft, the conveyor unit comprising a lift system, food containers and several gripping mechanisms (7), and the gripping mechanisms (7), disposed on the lift system which moves to the gripping position from above, move food containers between at least two decks, **characterised in that** the food container is provided with the same number of catch elements (9) as there are gripping mechanisms (7) on the food container (3), in which the corresponding gripping mechanisms (7) engage, and each gripping mechanism (7) has a lifting hook (10) and a lock pawl (11) and the lifting hook (10) and the lock pawl (11) are mechanically coupled, and the lifting hook (10) is moved into engagement with the catch element (9) in order to lock the food container (3) in the horizontal direction and the pawl lock (11) engages on an upper region of the food container in order to lock it in the vertical direction.

2. Conveyor unit as claimed in claim 1, **characterised in that** the catch elements (9) on the side wall of the food container (3) are disposed in the top corner region.

3. Conveyor unit as claimed in one of claims 1 or 2, **characterised in that** catch elements (7) are provided, incorporated in the top region of the container side wall.

4. Conveyor unit as claimed in one of claims 1 to 3, **characterised in that**, on reaching an open position during the lowering movement, an activation element (12) slides along a rocker guide (113) of the pawl lock (11) and releases a locking arm (111) from the top edge (31) of the food container (3).

5. Conveyor unit as claimed in one of claims 1 to 4, **characterised in that**, during the lowering movement, the lock pawl (11) is forcibly locked by means of a guide element (115) until an open position is reached.

6. Conveyor unit as claimed in one of claims 1 to 5, **characterised in that** the lifting hook (10) and the catch pawl (11) are mechanically coupled by means of a stop arm (114) which, on being released within a specific lowering distance and having reached an activation element (12), moves a driver (101) of the lifting hook (10) and thus unlocks a latch claw (103) from the hooked position (92).

7. Conveyor unit as claimed in one of claims 1 to 6, **characterised in that** return mechanisms (14) are provided on the lock pawl (11) and on the lifting hook (10), which hold the lifting hook (10) and the lock pawl (11) permanently engaged with the food container (3), which can not be released until an activation element (12) is activated.

8. Conveyor unit as claimed in claim 7, **characterised in that** the return mechanisms (14) are provided in the form of spring mechanisms (141, 142).

9. Conveyor unit in as claimed in one of claims 1 to 8, **characterised in that** the engaged position is obtained by lowering the gripping mechanism (7) so that the lifting hook (10) slides across an inclined hooking surface (93) of the catch element (9) against a return force until the latch claw (103) is latched in the hooking position (92).

10. Conveyor unit as claimed in one of claims 1 to 9, **characterised in that** the release position is obtained by lowering the gripping mechanism (7) once a lock arm (111) is released, causing the lifting hook (10) to slide across a release surface (91) of the catch element (9) against a return force until the latch claw (103) is released due to the lifting hook (10) rotating about a rotation point (102).

## Revendications

1. Dispositif de transport pour le transport vertical de chariots de service (3) dans un avion de ligne, dans lequel le dispositif de transport comprend un système élévateur, des chariots de service et plusieurs dispositifs de préhension (7) et les dispositifs de préhension (7) sont agencés sur le système élévateur auquel on accède par le dessus et qui déplace des chariots de service entre au moins deux ponts, **caractérisé en ce que**, en fonction du nombre des dispositifs de préhension (7), il est prévu sur le chariot de service (3) des éléments d'encliquetage (9), dans lesquels s'effectue l'enclenchement du dispositif de préhension correspondant (7) et le dispositif de préhension respectif (7) présente un crochet élévateur (10) ainsi qu'un cliquet de verrouillage (11), où le crochet élévateur (10) et le cliquet de verrouillage (11) sont couplés mécaniquement, le crochet élévateur (10) est enclenché sur l'élément d'encliquetage (9) pour verrouiller le chariot de service (3) dans la direction horizontale et le cliquet de verrouillage (11) s'enclenche sur une zone supérieure du chariot de service.

2. Dispositif de transport selon la revendication 1, **caractérisé en ce que** l'aménagement des éléments d'encliquetage (9) s'effectue sur la paroi latérale du chariot de service (3) dans la zone d'angle supérieure.

3. Dispositif de transport selon l'une quelconque des revendications 1 ou 2, **caractérisé en ce que** des éléments d'encliquetage incorporés (7) sont prévus sur la zone supérieure de la paroi latérale des chariots.

4. Dispositif de transport selon l'une quelconque des revendications 1 à 3, **caractérisé en ce que**, pendant le mouvement d'abaissement, en atteignant une position d'ouverture, un élément d'activation (12) glisse le long d'un guide de coulisse (113) du cliquet de verrouillage (11) et dégage un bras de verrouillage (111) de l'arête supérieure (31) du chariot de service (3).

5. Dispositif de transport selon l'une quelconque des revendications 1 à 4, **caractérisé en ce que**, pendant le mouvement d'abaissement, en atteignant une position d'ouverture, le cliquet de verrouillage (11) est verrouillé à force au moyen d'un élément de guidage (115).

6. Dispositif de transport selon l'une quelconque des revendications 1 à 5, **caractérisé en ce qu'**un couplage mécanique entre le crochet élévateur (10) et le cliquet de verrouillage (11) s'opère au moyen d'un bras de butée (114) qui, par déclenchement à l'intérieur d'un trajet d'abaissement déterminé, après avoir atteint un élément d'activation (12), déplace un entraîneur (101) du crochet élévateur (10) et déverrouille donc un mors d'enclenchement (103) de la position de crochetage (92).

7. Dispositif de transport selon l'une quelconque des revendications 1 à 6, **caractérisé en ce que** sont agencés sur le cliquet de verrouillage (11) ainsi que sur le crochet élévateur (10) des dispositifs de rappel (14) qui provoquent un enclenchement permanent du crochet élévateur (10) et du cliquet de verrouillage (11) avec le chariot de service (3), qui ne peut être déconnecté que par activation d'un élément d'activation (12).

8. Dispositif de transport selon la revendication 7, **caractérisé en ce que** les dispositifs de rappel (14) se présentent sous la forme de dispositifs à ressort (141, 142).

9. Dispositif de transport selon l'une quelconque des revendications 1 à 8, **caractérisé en ce que**, pour restaurer la position d'enclenchement, on effectue un abaissement du dispositif de préhension (7) et le crochet élévateur (10) glisse en l'occurrence à l'encontre d'une force de rappel via un biseau d'accrochage (93) de l'élément d'encliquetage (9) jusqu'à ce que le mors d'enclenchement (103) soit enclenché dans la position de crochetage (92).

10. Dispositif de transport selon l'une quelconque des revendications 1 à 9, **caractérisé en ce que**, pour atteindre la position de découplage, il se fait un abaissement du dispositif de préhension (7) après qu'un bras de verrouillage (111) a été déverrouillé et le crochet élévateur (10) glisse en l'occurrence à l'encontre d'une force de rappel via un biseau de décrochage (91) de l'élément d'encliquetage (9) jusqu'à ce que le mors d'enclenchement (103) se déclenche par rotation du crochet élévateur (10) autour d'un point de rotation (102).
